# EUROPEAN PATENT APPLICATION

(11) **EP 2 071 366 A1**
(43) Date of publication of application: **17.06.2009**
(21) Application number: 07828960.0
(22) Date of filing: 01.10.2007
(51) Int. Cl.: G02B 1/11, C09D 7/12, C09D 201/00

(54) **COATING COMPOSITION FOR FORMATION OF ANTIREFLECTIVE FILM, AND ARTICLE HAVING ANTIREFLECTIVE FILM FORMED THEREIN**

(30) Priority: 02.10.2006 JP 2006271015
(71) Applicant: Asahi Glass Company, Limited, Chiyoda-ku Tokyo 100-8405 (JP)
(72) Inventor: YONEDA, Takashige, Tokyo 100-8405 (JP); KAWAI, Yohei, Tokyo 100-8405 (JP)
(74) Representative: Müller-Boré & Partner Patentanwälte
(86) International application number: PCT/JP2007/069220
(87) International publication number: WO 2008/041681

(57) **Abstract**

The present invention provides a coating solution for forming antireflective film which can form an antireflective film having high antireflective performance and high film strength; and an article having high antireflective performance for a long period of time.

A coating composition for forming antireflective film containing a dispersion medium, a fibrous solid fine particles, hollow fine particles and a binder, wherein the average agglomerated particle size of the fibrous solid fine particles measured by a dynamic light-diffusion method is larger than the average agglomerated particle size of the hollow fine particles measured by a dynamic light-scattering method; and an article on which an antireflective film made from the coating composition for forming antireflective film is formed.

## Description

### TECHNICAL FIELD

The present invention relates to a coating composition for forming antireflective film, and an article on which an antireflective film is formed.

### BACKGROUND ART

As antireflective films, the following films are known.
(1) An antireflective film containing hollow fine particles and a binder (Patent Document 1).
(2) An antireflective film containing fibrous solid fine particles, spherical solid fine particles and a binder (Patent Document 2).
(3) An antireflective film containing hollow fine particles, solid fine particles larger than the hollow fine particles, and a binder (Patent Document 3).

In the antireflective film of (1), since strength of hollow fine particles is insufficient, it is necessary to increase the amount of the binder to obtain sufficient film strength. However, if the binder is increased, voids in the film decreases, the refractive index of the film increases, and the antireflective effect decreases.

In the antireflective film of (2), since it does not contain hollow fine particles, film strength is sufficient. However, since there is little void in the film, the refractive index of the film is high and antireflective film effect is insufficient.

In the antireflective film of (3), since it contains solid fine particles larger than the hollow fine particles, its film strength is improved. However, by coating solid fine particles larger than the hollow fine particles, voids in the film are decreased, the refractive index of the film is increased, and the antireflective effect becomes insufficient.
Patent Document 1: JP-A-2001-233611
Patent Document 2: JP-A-2005-010470
Patent Document 3: JP-A-2006-117924

### DISCLOSURE OF THE INVENTION

### PROBLEMS TO BE SOLVED BY THE INVENTION

The present invention provides a coating composition for forming antireflective film, which can form an antireflective film having high antireflective effect and high film strength, and an article having high antireflective effect for long period of time.

### MEANS OF SOLVING THE PROBLEMS

The present invention has the following gists.
(1) A coating composition for forming antireflective film containing a dispersion medium, fibrous solid fine particles, hollow fine particles and a binder, wherein an average agglomerated particle size of the fibrous solid fine particles measured by a dynamic light-scattering method is larger than an average agglomerated particle size of the hollow fine particles measured by a dynamic light-scattering method.
(2) The coating composition for forming antireflective film according to the above (1)., wherein any one of the fibrous solid fine particles, the hollow fine particles and the binder contains SiO₂.
(3) The coating composition for forming antireflective film according to the above (1), wherein the fibrous solid fine particles and the hollow fine particles contain SiO₂.
(4) The coating composition for forming antireflective film according to any one of the above (1) to (3), wherein the hollow fine particles are fibrous hollow fine particles.
(5) The coating composition for forming antireflective film according to any one of the above (1) to (4), wherein an aspect ratio of the fibrous solid fine particles or the hollow fine particles is from 2 to 10.
(6) The coating composition for forming antireflective film according to any one of the above (1) to (4), wherein aspect ratios of the fibrous solid fine particles and the hollow fine particles are each from 2 to 10.
(7) The coating composition for forming antireflective film according to any one of the above (1) to (6), wherein a mass ratio (fibrous solid fine particles/hollow fine particles) between the fibrous solid fine particles and the hollow fine particles is from 0.1 to 1.5.
(8) The coating composition for forming antireflective film according to any one of the above (1) to (6), wherein a mass ratio (fibrous solid fine particles/hollow fine particles) between the fibrous solid fine particles and the hollow fine particles is from 0.25 to 1.5.
(9) An article on which an antireflective film produced from the coating composition for forming antireflective film as defined in any one of the above (1) to (8) is formed.
(10) The article according to the above (9), wherein the ratio (average agglomerated particle size of fibrous solid fine particles/film thickness of antireflective film) between the average agglomerated particle size of the fibrous solid fine particles measured by a dynamic light-scattering method and the film thickness of the antireflective film, is from 0.5 to 1.0.
(11) The article according to the above (9) or (10), wherein the film thickness of the antireflective film is from 50 to 300 nm.

### EFFECTS OF THE INVENTION

According to the coating composition for forming antireflective film of the present invention, it is possible to form an antireflective film having high antireflective effect and high film strength.

The article of the present invention can maintain high antireflective effect for long period of time.

### BEST MODE FOR CARRYING OUT THE INVENTION

### FIBROUS SOLID FINE PARTICLES

"Fibrous" in the fibrous solid fine particles means that the length in the extension direction is larger than the length in a direction perpendicular to the extension direction. The fibrous solid fine particles may be primary particles or secondary particles each consisting of a plurality of agglomerated solid fine particles. Namely, the fibrous solid fine particles include both of solid fine particles that are primary particles each having a length in the extension direction longer than the length in a direction perpendicular to the extension direction, and solid fine particles that are secondary particles each having a length in the extension direction longer than the length in a direction perpendicular to the extension direction (each consisting of primary particles of any shape). The fibrous solid fine particles are preferably ones of needle shape or rod shape, the secondary particles each consisting of a plurality of connected solid fine particles, are preferably ones of chain shape or pearl necklace shape. The shape of the fibrous solid fine particles may be a linearly extending shape or a two-dimensionally or three-dimensionally curved shape etc., and for the reason that voids are easily formed between adjacent fibrous solid fine particles, it is preferably two-dimensionally or three-dimensionally curved shape, more preferably three-dimensionally curved shape. The length of particles in the extension direction are different from one another, and the length is distributed in a certain range. The average length of particles in the extension direction means the average value of the distribution. The average length in the direction perpendicular to the extension direction is defined in the same manner.

The material of the fibrous solid fine particles may, for example, be an inorganic material such as SiO₂, Al₂O₃, SnO₂ (ATO, FTO), TiO₂, ZrO₂, ZnO (AZO, GZO), Fe₂O₃, CeO₂, Sb₂O₃, Sb₂O₅, In₂O₃ (ITO) or carbon; or an organic material such as an acrylic resin, a styrene resin, an urethane acrylate resin, an epoxy acrylate resin, a polyester acrylate, a polyether acrylate, an epoxy resin or a silicone resin; and for the reasons of relatively low refractive index, excellent chemical stability and excellent adhesiveness to glass, it is preferably a material containing SiO₂, and more preferably a material consisting essentially of SiO₂.

The average agglomerated particle size of the fibrous solid fine particles is preferably from 20 to 200 nm, more preferably from 50 to 100 nm. When the average agglomerated particle size of the fibrous solid fine particles is at least 20 nm, sufficient voids are formed between adjacent fibrous solid fine particles, and accordingly, the refractive index of the antireflective film decreases and antireflective effect increases. When the average agglomerated particle size of the fibrous solid fine particles is at most 200 nm, scattering of light is suppressed and an antireflective film having high transparency can be obtained.

The average agglomerated particle size of the fibrous solid fine particles is the average agglomerated particle size of the fibrous solid fine particles in a dispersion medium, and it is measured by a dynamic light-scattering method.

The refractive index of the fibrous solid fine particles is preferably from 1.3 to 3.0, more preferably from 1.3 to 2.0. When the refractive index of the fibrous solid fine particles is at least 1.3, an antireflective film having a refractive index of at least 1.2 is easily obtainable, and an antireflective film excellent in antireflective performance when it is provided on a glass substrate, is obtainable. When the refractive index of the fibrous solid fine particles is at most 3.0, an antireflective film having a refractive index of at most 1.4 is easily obtainable, and an antireflective film excellent in antireflective performance when it is provided on a glass substrate is obtained.

The refractive index of the fibrous solid fine particles is a refractive index at 550 nm, and it is determined by measuring the refractive index of the fine particles in a state that they are dispersed in a dispersion medium or in a state that they are formed into a thin coating film together with matrix, by using a refractive index meter, and converting the measured value by considering volume ratio.

The aspect ratio of the fibrous solid fine particles is preferably from 2 to 10, more preferably from 5 to 10. When the aspect ratio of the fibrous solid fine particles is at least 2, sufficient voids are formed between adjacent fibrous solid fine particles, and accordingly, the refractive index of the antireflective film decreases, and the antireflective effect increases. When the aspect ratio of the fibrous solid fine particles is at most 10, film-forming property becomes excellent and an antireflective film excellent in external appearance can be obtained.

The aspect ratio of the fibrous solid fine particles is a value calculated by dividing the length of the fine particles in the extension direction by the length in a direction perpendicular to the extension direction, and the length in the extension direction and the length in a direction perpendicular to the extension direction are observed by e.g. an electron microscope. Here, with respect to simply dispersed fibrous solid fine particles without having secondary agglomeration, the aspect ratios of the fibrous solid fine particles, that are primary particles, are observed. With respect to fibrous solid fine particles undergoing secondary agglomeration to form a secondary particle having a length in the extension direction longer than the length in a direction perpendicular to the extension direction, the aspect ratio of the secondary particle is observed.

The fibrous solid fine particles are available as a commercial product. The commercial product of fibrous solid fine particles may, for example, be "IPA-ST-UP" manufactured by Nissan Chemical Industries, Ltd.

Further, the fibrous solid fine particles can be produced by a known production method. The method for producing fibrous solid fine particles may, for example, be a method described in the example of JP-A-1-317115. Specifically, by adding a binder component to a dispersion of solid fine particles and heating them under the presence of multivalent metal ions, fibrous solid fine particles are obtained.

### HOLLOW FINE PARTICLES

The hollow fine particles are particles each having a void inside of an outer shell. The hollow fine particles may, for example, be spherical hollow fine particles or fibrous hollow fine particles each having a length in the extension direction longer than the length in a direction perpendicular to the extension direction, and the hollow fine particles are preferably fibrous hollow fine particles for the reason that a void is easily formed between adjacent particles. In the same manner as the case of fibrous solid fine particles, the fibrous hollow fine particles may be primary particles or secondary particles each consisting of a plurality of agglomerated hollow fine particles.

The material of the hollow fine particles may, for example, be an inorganic material such as SiO₂, Al₂O₃, SnO₂ (ATO, FTO), TiO₂, ZrO₂, ZnO (AZO, GZO), Fe₂O₃, CeO₂, Sb₂O₃, Sb₂O₅, In₂O₃ (ITO) or carbon; or an organic material such as an acrylic resin, a styrene resin, an urethane acrylate resin, an epoxy acrylate resin, a polyester acrylate, a polyether acrylate, an epoxy resin or a silicone resin; and for the reasons of relatively low refractive index, excellent chemical stability and excellent adhesiveness to glass, it is preferably a material containing SiO₂, and more preferably a material consisting essentially of SiO₂.

In the present invention, it is particularly preferred that both of the fibrous solid fine particles and the hollow fine particles contain SiO₂.

The average agglomerated particle size of the hollow fine particles is preferably from 5 to 300 nm, more preferably from 10 to 100 nm. When the average agglomerated particle size of the hollow fine particles is at least 5 nm, sufficient voids are formed between adjacent hollow fine particles, and accordingly, the refractive index of the antireflective film decreases and antireflective effect increases. When the average agglomerated particle size of hollow fine particles is at most 300 nm, scattering of light can be suppressed, and an antireflective film having high transparency can be obtained.

The average agglomerated particle size of the hollow fine particles is the average agglomerated particle size of the hollow fine particles in a dispersion medium, and that is measured by a dynamic light-scattering method. Accordingly, in a case of spherical hollow fine particles of single dispersion having no secondary agglomeration, the average agglomerated particle size substantially agrees with the average primary particle size.

The thickness of an outer shell of a hollow fine particles is preferably from 1 to 50 nm, and it is preferably from 1/20 to 1/3 of the average primary particle size of the hollow fine particles. When the thickness of the outer shells of the hollow fine particles is within this range, an antireflective film having sufficient strength and excellent antireflective performance can be obtained.

The thickness of outer shells and the average primary particle size of the hollow fine particles are values obtained by observing hollow fine particles by a transmission type electron microscope, selecting 100 particles randomly, measuring the thickness of the outer shell and the particle size of each of the hollow fine particles, and averaging the thicknesses of the outer shells of the 100 hollow fine particles and averaging particle sizes of these particles.

The refractive index of the hollow fine particles is preferably from 1.1 to 1.4, more preferably from 1.2 to 1.35. When the refractive index of the hollow fine particles is at least 1.1, it is easy to obtain an antireflective film having a refractive index of at least 1.2, and an antireflective film excellent in antireflective performance when it is provided on a glass substrate can be obtained. When the refractive index of the hollow fine particles is at most 1.4, it is easy to obtain an antireflective film having a refractive index of at most 1.4, and an antireflective film excellent in antireflective performance when it is provided on a glass substrate can be obtained.

The refractive index of the hollow fine particles is a refractive index at 550 nm, and is determined by measuring the refractive index of the particles in a state that they are dispersed in a dispersion medium or in a state that they are formed into a coating film together with a matrix, by a refractive index meter, and converting the measured value by considering volume ratio.

The hollow fine particles may be, besides the above spherical hollow fine particles or fibrous hollow fine particles, fine particles of tube-shape or sheet-shape may also be employed as primary particles. Further, for the reason that a void is easily formed between adjacent fine particles and an antireflective film excellent in antireflective performance can be easily obtained, fibrous hollow fine particles are preferred. The aspect ratio of the fibrous hollow fine particles is preferably from 2 to 10, more preferably from 5 to 10. When the aspect ratio of the fibrous hollow fine particles is at least 2, sufficient voids are formed between adjacent fine particles, and accordingly, the refractive index of the antireflective film decreases and antireflective effect increases. When the aspect ratio of the fibrous hollow fine particles is at most 10, film-forming property becomes excellent and an antireflective film excellent in external appearance can be obtained.

The aspect ratio of the fibrous hollow fine particles is a value obtained by dividing the length of a fine particle in the extension direction by the direction in a direction perpendicular to the extension direction, and the length in the extension direction and the length in a direction perpendicular to the extension direction are observed by e.g. an electron microscope. Here, with respect to fibrous hollow fine particles of single dispersion undergoing no secondary agglomeration, the aspect ratio of the fibrous hollow fine particles that are primary particles is observed. With respect to fibrous hollow fine particles agglomerated to form a secondary particle having a length in the extension direction longer than a length in a direction perpendicular to the extension direction, the aspect ratio of the secondary particle is observed.

In the present invention, it is preferred that both of the aspect ratio of the fibrous solid fine particles and the aspect ratio of the hollow fine particles are from 2 to 10, more preferably from 5 to 10.

The spherical hollow fine particles are produced, for example, by removing a core of each core-shell particle.

Specifically, when the outer shell (shell) is made of SiO₂, the particles are produced by the following steps.
(a) A step of hydrolyzing a SiO₂ precursor material in a dispersion medium under the presence of core fine particles, to precipitate SiO₂ on each core fine particle surface to obtain core-shell particles.
(b) A step of dissolving or decomposing the core of each core-shell particle.

### (a) STEP:

As the core particles, thermally decomposable organic fine particles (surfactant micells, water-soluble organic polymers, styrene resins, acrylic resins, etc.), acid-soluble inorganic fine particles (ZnO, NaAlO₂, CaCO₃, basic ZnCO₃, etc.) or opto-soluble inorganic fine particles (ZnS, CdS, ZnO, etc.).

The SiO₂ precursor material may, for example, be silicic acid, a silicate or a silicic alkoxide. The dispersion medium may, for example, be water, an alcohol (methanol, ethanol, isopropanol, etc.), a ketone (acetone, methyl ethyl ketone, etc.), an ether (tetrahydrofuran, 1,4-dioxane, etc.), an ester (ethyl acetate, methyl acetate, etc.), a glycol ether (ethylene glycol monoalkyl ether, etc.), a nitrogen-containing compound (N,N-dimethylacetamide, N,N-dimethylformamide, etc.) or a sulfur-containing compound (dimethylsul-foxide, etc.).

The dispersion medium contains from 5 to 100 mass% of water based on 100 mass% of dispersion medium since water is required for hydrolyzing the SiO₂ precursor material.

The pH of the dispersion medium is preferably at least 7, more preferably at least 8, particularly preferably from 9 to 10 for the reason that the SiO₂ precursor material is easily polymerized three-dimensionally to form a shell. In a case of employing acid-soluble inorganic fine particles as core fine particles, the pH is preferably at least 8 at which the fine particles are not soluble.

### (b) STEP:

When the core fine particles are acid-soluble inorganic fine particles, the core fine particles can be dissolved by adding an acid to thereby remove these core fine particles.

The acid may, for example, be an inorganic acid (hydrochloric acid, sulfuric acid, nitric acid, etc.), an organic acid (formic acid, acetic acid, etc.) or an acidic-cation-exchanged resin.

The fibrous hollow fine particles that are primary particles and are elongated hollow fine particles, can be produced by using fibrous solid fine particles as cores, forming shells thereon, and thereafter, removing the cores. The fibrous hollow fine particles each consisting of a plurality of connecetd hollow fine particles, can be produced in the same manner as the production method for the fibrous solid fine particles that are secondary particles being agglomerations, except that hollow fine particles are used instead of solid fine particles.

The hollow fine particles may be subjected to hydrothermal treatment for improving strength.

### BINDER

The binder may be a hydrolyzable silane (tetramethoxysilane, tetraethoxysilane, etc.), an oligomer silicate obtainable by hydrolyzing a hydrolyzable silane, a silicon compound (a silicate, a trimethyl silanol, etc.) having a silanol group, an active silica (a water glass, an ortho sodium silicate, etc.), or an organic polymer (a polyethylene glycol, a polyacrylamide derivative, a polyvinyl alcohol, etc.). The binder is particularly preferably an oligomer silicate containing SiO₂.

In the present invention, it is particularly preferred that each of the fibrous solid fine particles, hollow fine particles and the binder contains SiO₂.

### DISPERSION MEDIUM

The dispersion medium may, for example, be water, an alcohol (methanol, ethanol, isopropanol, etc.), a ketone (acetone, methyl ethyl ketone, etc.), an ether (tetrahydrofuran, 1,4-dioxane, etc.), an ester (ethyl acetate, methyl acetate, etc.), a glycol ether (ethylene glycol monoalkyl ether, etc.), a nitrogen-containing compound (N,N-dimethylacetamide, N,N-dimethylformamide, etc.) or a sulfur-containing compound (dimethylsulfoxide, etc.).

### COATING SOLUTION FOR FORMING ANTIREFLECTIVE FILM

The coating solution for forming antireflective film of the present invention contains a dispersion medium, fibrous solid fine particles, hollow fine particles and a binder.

The average agglomerated particle size of the fibrous solid fine particles measured by the dynamic light-scattering method is at least the average agglomerated particle size of the hollow fine particles measured by the dynamic light-scattering method. When the average agglomerated particle size of the fibrous solid fine particles is at least the average agglomerated particle size of the hollow fine particles, the fibrous solid fine particles having high strength mainly receives external pressure, whereby the hollow fine particles having low strength become less likely be squashed and the film strength of the antireflective film increases. The ratio between the average agglomerated particle size of the fibrous solid fine particles and the average agglomerated particle size of the hollow fine particles (average agglomerated particle size of fibrous solid fine particles/average agglomerated particle size of hollow fine particles) is necessarily at least 1.0, preferably from 1.0 to 5.0, more preferably from 1.2 to 4.0.

The mass ratio between the fibrous solid fine particles and the hollow fine particles (fibrous solid fine particles/hollow fine particles) is preferably from 0.1 to 1.5, more preferably from 0.25 to 1.5. When the ratio of the fibrous solid fine particles/hollow fine particles (mass ratio) is at least 0.1, an antireflective film having sufficient film strength can be formed. When the ratio of fibrous solid fine particles/hollow fine particles (mass ratio) is at most 1.5, it is possible to maintain low refractive index of the antireflective film and to form an antireflective film having high antireflective effect.

The mass ratio between the binder and all particles (binder/(fibrous solid fine particles+hollow fine particles)) is preferably from 0.1 to 2.0, more preferably from 0.2 to 1.0. When the ratio of binder/(fibrous solid fine particles+hollow fine particles) (mass ratio) is at least 0.1, an antireflective film having sufficient film strength can be formed. When the ratio of binder/(fibrous solid fine particles+hollow fine particles) (mass ratio) is at most 2.0, it is possible to maintain low refractive index of antireflective film and to form an antireflective film having high antireflective effect.

The solid content concentration in the coating composition for forming antireflective film of the present invention is preferably from 0.1 to 20.0 mass%.

The coating composition for forming antireflective film of the present invention may contain solid fine particles (spherical solid fine particles, sheet-shaped solid fine particles, etc.) other than the fibrous solid fine particles to the extent not impairing the effect of the present invention.

The coating composition for forming antireflective film of the present invention may contain an alkali earth metal salt such as chloride, nitrate, sulfate, formate or acetate of magnesium, calcium, strontium or barium; a curing catalyst such as an inorganic acid, an organic acid, a base, a metal chelate compound, a quaternary ammonium salt or an organic tin; or a known additive such as inorganic fine particles, an organic pigment, a die or an organic resin each showing UV-shielding property, infrared-shielding property or conductivity.

The coating composition for forming antireflective film of the present invention described above contains fibrous solid fine particles and hollow fine particles, wherein the average agglomerated particle size of the fibrous solid fine particles measured by the dynamic light-scattering method is larger than the average agglomerated particle size of the hollow fine particles measured by the dynamic light-scattering method, whereby the hollow fine particles are not likely to be squashed and the film strength of the antireflective film becomes high. Further, since fibrous solid fine particles are employed as solid fine particles, voids are formed between adjacent fibrous solid fine particles, and the refractive index of the antireflective film becomes low. Accordingly, it is possible to increase antireflective effect of the antireflective film while high strength of the antireflective film is maintained.

### ARTICLE ON WHICH ANTIREFLECTIVE FILM IS FORMED

The article of the present invention is an article on which an antireflective film formed from the coating solution for forming antireflective film of the present invention is formed.

The film thickness of the antireflective film is preferably from 50 to 300 nm, more preferably from 80 to 200 nm. When the film thickness of the antireflective film is at least 50 nm, interference of light occurs and antireflective performance is exhibited. When the film thickness of the antireflective film is at most 300 nm, it is possible to form the film without having cracks.

The film thickness of the antireflective film can be determined by measuring a step between a coated area and non-coated area by a step height meter.

The ratio between the average agglomerated particle size of the fibrous solid fine particles measured by a dynamic light-scattering method and the film thickness of the antireflective film (average agglomerated particle size of fibrous solid fine particles/film thickness of antireflective film) is preferably from 0.5 to 1.0, more preferably from 0.7 to 0.9. When the ratio of average agglomerated particle size of fibrous solid fine particles/film thickness of antireflective film is at least 0.5, the fibrous solid fine particles having high strength mainly receives external pressure, whereby hollow fine particles having low strength becomes unlikely be squashed and the film strength of the antireflective film increases. When the ratio of average agglomerated particle size of fibrous solid fine particles/film thickness of antireflective film is at most 1.0, the fibrous solid fine particles do not extrude from the surface of the antireflective film, whereby the fibrous solid fine particles become unlikely come off from the antireflective film.

The refractive index of the antireflective film is preferably from 1.2 to 1.4, more preferably from 1.23 to 1.35. When the refractive index of the antireflective film is at least 1.2, light reflected at the upper face of the film and light reflected at the lower face of the film interfere and cancel each other, whereby an antireflective film excellent in antireflective performance can be obtained. When the refractive index of the antireflective film is at most 1.4, light reflected at the upper face of the film and light reflected at the lower face of the film interfere and cancel each other, whereby an antireflective film excellent in antireflective performance can be obtained when the film is provided on a glass substrate.

The refractive index of the antireflective film is an antireflective film at 550 nm, and it is measured by a refractive index meter.

The antireflective film can be formed by coating a substrate surface with the coating composition for forming antireflective film of the present invention, and drying the coated film.

The material of the substrate may, for example, be a glass, a metal, an organic polymer or silicon, and the substrate may have another coated film in advance. The organic polymer may, for example, be polyethylene terephthalate, polycarbonate or polymethyl methacrylate.

The shape of the substrate may, for example, be a plate or a film.

The coating method may, for example, be bar coating, die coating, gravure coating, roll coating, flow coating, spray coating, online spray coating or dip coating. The online spray coating is a method of performing a spray coating of a substrate in a molding line of the substrate, which is useful since a step of reheating the substrate can be omitted and a product can be produced at low cost.

The article of the present invention described above has an antireflective film having high antireflective performance and high film strength, whereby high antireflective effect can be maintained for a long period of time.

### EXAMPLES

From now, the present invention will be described in further detail with reference to Examples, but the present invention is not limited to these Examples.

Examples 1 to 9 are Examples of the present invention, and Examples 10 to 15 are Comparative Examples.

### OUTER SHELL THICKNESS AND AVERAGE PRIMARY PARTICLE SIZE OF HOLLOW FINE PARTICLES

The hollow fine particles are observed by a transmission type electron microscope (H-9000, manufactured by Hitachi, Ltd.), 100 particles (primary particles) are randomly selected, outer shell thickness and particle size of these hollow fine particles were measured, and the outer shell thicknesses and the particle sizes of the 100 hollow fine particles are each averaged, to determine the outer shell thickness and the average primary particle size of the hollow fine particles.

### AVERAGE AGGLOMERATED PARTICLE SIZE OF FINE PARTICLES

The average agglomerated particle size of the fine particles were measured by using a dynamic light-scattering particle analyzer (Microtrac UPA, manufactured by Nikkiso Co., Ltd.). In a case of single dispersion having no secondary agglomeration, the average primary particle size and the average agglomerated particle size of spherical fine particles substantially agree with each other.

### ASPECT RATIO OF FINE PARTICLES

The aspect ratio of primary particles or secondary particles were determined by observing fine particles by a transmission type electron microscope (H-9000, manufactured by Hitachi, Ltd.), randomly selecting 100 particles (primary particles or secondary particles), measuring the length in the extension direction and the length in a direction perpendicular to the extension direction of each particle, and averaging values obtained by dividing the length in the extension direction by the length in a direction perpendicular to the extension direction.

### EXTERNAL APPEARANCE

The antireflective film was visually observed, and evaluated under the following criteria.
○: There is no coating unevenness and external appearance is good.
×: There is coating unevenness and the film is not practically usable.

### HAZE VALUE

According to JIS K-7105 (year 1981), the haze value of the antireflective film on a substrate was measured by a haze computer (HGM-3DP, manufactured by Suga Test Instruments Co., Ltd.).

### MINIMUM REFLECTIVITY

The reflectivity of the antireflective film on a substrate within a range of from 380 to 1,200 nm was measured by a spectrophotometer (model U-4100, manufactured by Hitachi, Ltd.), and the minimum value of reflectivity was determined. A surface of the antireflective film was abraded by 1,000 shuttles with a felt with 100 g load, and thereafter, the reflectivity was measured in the same manner to determine the minimum value of reflectivity.

The difference (Δ reflectivity) between the minimum reflectivity after abrasion and the minimum reflectivity before abrasion was determined.

### PRODUCTION EXAMPLE 1

### PRODUCTION OF SPHERICAL HOLLOW FINE PARTICLES (1):

In a container of 200 mL made of glass, 60 g of ethanol, 30 g of water-dispersion sol of ZnO fine particles (average primary particle size: 20 nm, average agglomerated particle size: 40 nm, solid content converted concentration: 20 mass%) and 10 g of tetraethoxysilane (SiO₂ solid content concentration: 29 mass%) were put, an ammonium aqueous solution was added to form a mixture of pH 10, it was stirred at 20°C for 6 hours to form 100 g of dispersion of core-shell particles (solid content concentration: 6 mass%).

To the 100 g of dispersion of core-shell particles, 100 g of strong-acid-cation-exchanged resin (total exchange capacity: at least 2.0 meq/mL), they were stirred for 1 hour to form a mixture of pH 4, it was filtered to remove the strong-acid-cation-exchanged resin to obtain a dispersion of spherical hollow fine particles (1) made of SiO₂. The dispersion was condensed by ultrafiltration so that its solid content concentration became 20 mass%. The spherical hollow fine particles (1) underwent.secondary agglomeration. The outer shell thickness of the spherical hollow fine particles (1) was 5 nm, and it was 1/6 of the average primary particle size. The average agglomerated particle size of the spherical hollow fine particles (1) was 40 nm. The aspect ratio of the spherical hollow fine particles (1) was 1.0.

### PRODUCTION EXAMPLE 2

### PRODUCTION OF SPHERICAL HOLLOW FINE PARTICLES (2):

A dispersion (solid content concentration: 20 mass%) of the spherical hollow fine particles (2) made of SiO₂ was obtained in the same manner as Production Example 1 except that the water-dispersion sol of ZnO fine particles (average primary particle size: 20 nm, average agglomerated particle size: 60 nm, solid content converted concentration: 20 mass%) was used instead of the above water-dispersion sol of ZnO fine particles. The outer shell thickness of the spherical hollow fine particles (2) was 5 nm, and it was 1/6 of the average primary particle size. The average agglomerated particle size of the spherical hollow fine particles (2) was 60 nm. The aspect ratio of the spherical hollow fine particles (2) was 1.0.

### PRODUCTION EXAMPLE 3

### PRODUCTION OF FIBROUS HOLLOW FINE PARTICLES (1):

In a container made of glass, 2,000 g of dispersion (solid content concentration: 3 mass%) of the spherical hollow fine particles (1) were put, and as they were stirred, 8.0 g of 10 mass% of calcium chloride aqueous solution and 12.0 g of 10 mass% potassium hydroxide aqueous solution were added. A mixed solution thus produced was put in an autoclave container of 2.5 L made of stainless steel, the solution was heated at 130°C for 24 hours to obtain a dispersion of fibrous hollow fine particles (1). The dispersion was concentrated by ultrafiltration so that its solid content concentration became 20 mass%. The fibrous hollow fine particles (1) underwent secondary agglomeration. The average agglomerated particle size of the fibrous hollow fine particles (1) was 70 nm. The aspect ratio of the fibrous hollow fine particles (1) was 5.0.

### PRODUCTION EXAMPLE 4

### PRODUCTION OF FIBROUS HOLLOW FINE PARTICLES (2):

A dispersion (solid content concentration: 20 mass%) of fibrous hollow fine particles (2) was obtained in the same manner as Production Example 3 except that the heating time in the autoclave container was changed to 6 hours. The fibrous hollow fine particles (2) underwent secondary agglomeration. The average agglomerated particle size of the fibrous hollow fine particles (2) was 50 nm. The aspect ratio of the fibrous hollow fine particles (2) was 2.0.

### PRODUCTION EXAMPLE 5

### PRODUCTION OF FIBROUS SOLID FINE PARTICLES (2):

2,000 g of colloid aqueous solution (SiO₂ solid content concentration: 3.56 mass%, pH: 2.81) of activated silicic acid was put, and while it was stirred, 8.0 g of 10 mass% calcium chloride aqueous solution and 12.0 g of 10 mass% sodium hydroxide aqueous solution were added. A mixed solution thus produced was put in an autoclave container of 2.5 L made of stainless steel, and it was heated at 130°C for 24 hours to obtain a dispersion of fibrous solid fine particles (2). The dispersion was concentrated by ultrafiltration so that its solid component concentration became 15 mass%. The fibrous solid fine particles (2) underwent secondary agglomeration. The average agglomerated particle size of the fibrous solid fine particles (2) was 150 nm. The aspect ratio of the fibrous solid fine particles (2) was 10.0.

### COMMERCIALLY AVAILABLE PARTICLES

Dispersion (single dispersion without secondary agglomeration) of fibrous solid fine particles (1): IPA-ST-UP manufactured by Nissan Chemical Industries, Ltd., solid content concentration: 15 mass%, average agglomerated particle size (average primary particle size): 90 nm, aspect ratio: 7.0.

Dispersion (single dispersion without secondary agglomeration) of spherical solid fine particles (1): IPA-ST manufactured by Nissan Chemical Industries, Ltd., solid content concentration: 30 mass%, average agglomerated particle size (average primary particle size): 13 nm, aspect ratio: 1.0.

Dispersion (single dispersion without secondary agglomeration) of spherical solid fine particles (2): IPA-ST-ZL manufactured by Nissan Chemical Industries, Ltd., solid content concentration: 30 mass%, average agglomerated particle size (average primary particle size): 85 nm, aspect ratio: 1.0.

Dispersion (single dispersion without secondary agglomeration) of spherical solid fine particles (3): IPA-ST-L manufactured by Nissan Chemical Industries, Ltd., solid content concentration: 20 mass%, average agglomerated particle size (average primary particle size): 45 nm, aspect ratio: 1.0.

### PRODUCTION EXAMPLE 6

### PRODUCTION OF SILICIC ACID OLIGOMER SOLUTION:

To an ethanol solution of tetraethoxysilane, a nitric acid solution was added so as to hydrolyze the tetraethoxysilane to obtain a silicic acid oligomer solution (solid content concentration: 5 mass%).

### EXAMPLE 1

In a container of 200 mL made of glass, 2 g of dispersion (solid content concentration: 20 mass%) of spherical hollow fine particles (1), 2 g of dispersion (solid content concentration: 15 mass%) of fibrous solid fine particles (1), 90 g of ethanol and 6 g of silicic acid oligomer solution (solid content concentration: 5 mass%) were put, and the mixture was stirred for 10 minutes,to obtain a coating composition for forming antireflective film.

The coating composition was applied to a surface of a glass substrate (100 mm × 100 mm, thickness: 3.5 mm) cleaned with an ethanol, it was subjected to spin coating at a rotation speed of 200 rpm for 60 seconds to be unified, and dried at 200°C for 30 minutes to form an antireflective film having a film thickness of 100 nm, and it was subjected to various evaluations. Tables 1 and 2 show the results.

### EXAMPLE 2

In a container of 200 mL made of glass, 4 g of dispersion (solid content concentration: 20 mass%) of spherical hollow fine particles (1), 4 g of dispersion (solid content concentration: 15 mass%) of fibrous solid fine particles (2), 80 g of ethanol and 12 g of silicic acid oligomer solution (solid content concentration: 5 mass%) were put, and the mixture was stirred for 10 minutes to obtain a coating composition for forming antireflective film.

An antireflective film having a film thickness of 150 nm was formed in the same manner as Example 1 except that the above coating composition was employed, and it was subjected to various evaluations. Tables 1 and 2 show the results.

### EXAMPLE 3

In a container of 200 mL made of glass, 3 g of dispersion (solid content concentration: 20 mass%) of spherical hollow fine particles (2), 0.7 g of dispersion (solid content concentration: 15 mass%) of fibrous solid fine particles (1), 90.3 g of ethanol and 6 g of silicic acid oligomer solution (solid content concentration: 5 mass%) were put, and the mixture was stirred for 10 minutes to obtain a coating composition for forming antireflective film.

An antireflective film having a film thickness of 100 nm was formed in the same manner as Example 1 except that the above coating composition was employed, and it was subjected to various evaluations. Tables 1 and 2 show the results.

### EXAMPLE 4

In a container of 200 mL made of glass, 1.5 g of dispersion (solid content concentration: 20 mass%) of spherical hollow fine particles (2), 3 g of dispersion (solid content concentration: 15 mass%) of fibrous solid fine particles (1), 90.5 g of ethanol and 5 g of silicic acid oligomer solution (solid content concentration: 5 mass%) were put, and the mixture was stirred for 10 minutes to obtain a coating composition for forming antireflective film.

An antireflective film having a film thickness of 100 nm was formed in the same manner as Example 1 except that the above coating composition was employed, and it was subjected to various evaluations. Tables 1 and 2 show the results.

### EXAMPLE 5

In a container of 200 mL made of glass, 2 g of dispersion (solid content concentration: 20 mass%) of fibrous hollow fine particles (1), 2 g of dispersion (solid content concentration: 15 mass%) of fibrous solid fine particles (1), 90 g of ethanol and 6 g of silicic acid oligomer solution (solid content concentration: 5 mass%) were put, and the mixture was stirred for 10 minutes to obtain a coating composition for forming antireflective film.

An antireflective film having a film thickness of 100 nm was formed in the same manner as Example 1 except that the above coating composition was employed, and it was subjected to various evaluations. Tables 1 and 2 show the results.

### EXAMPLE 6

In a container of 200 mL made of glass, 2 g of dispersion (solid content concentration: 20 mass%) of fibrous hollow fine particles (2), 2 g of dispersion (solid content concentration: 15 mass%) of fibrous solid fine particles (1), 90 g of ethanol and 6 g of silicic acid oligomer solution (solid content concentration: 5 mass%) were put, and the mixture was stirred for 10 minutes to obtain a coating composition for forming antireflective film.

An antireflective film having a film thickness of 100 nm was formed in the same manner as Example 1 except that the above coating composition was employed, and it was subjected to various evaluations. Tables 1 and 2 show the results.

### EXAMPLE 7

In a container of 200 mL made of glass, 1 g of dispersion (solid content concentration: 20 mass%) of spherical hollow fine particles (2), 1 g of dispersion (solid content concentration: 20 mass%) of fibrous hollow fine particles (1), 2 g of dispersion (solid content concentration: 15 mass%) of fibrous solid fine particles (1), 90 g of ethanol and 6 g of silicic acid oligomer solution (solid content concentration: 5 mass%) were put, and the mixture was stirred for 10 minutes to obtain a coating composition for forming antireflective film.

An antireflective film having a film thickness of 100 nm was formed in the same manner as Example 1 except that the above coating composition was employed, and it was subjected to various evaluations. Tables 1 and 2 show the results.

### EXAMPLE 8

In a container of 200 mL made of glass, 2.75 g of dispersion (solid content concentration: 20 mass%) of spherical hollow fine particles (1), 1 g of dispersion (solid content concentration: 15 mass%) of fibrous solid fine particles (1), 90.25 g of ethanol and 6 g of silicic acid oligomer solution (solid content concentration: 5 mass%) were put, and the mixture was stirred for 10 minutes to obtain a coating composition for forming antireflective film.

An antireflective film having a film thickness of 100 nm was formed in the same manner as Example 1 except that the above coating composition was employed, and it was subjected to various evaluations. Tables 1 and 2 show the results.

### EXAMPLE 9

In a container of 200 mL made of glass, 2.85 g of dispersion (solid content concentration: 20 mass%) of spherical hollow fine particles (1), 0.87 g of dispersion (solid content concentration: 15 mass%) of fibrous solid fine particles (1), 90.28 g of ethanol and 6 g of silicic acid oligomer solution (solid content concentration: 5 mass%) were put, and the mixture was stirred for 10 minutes to obtain a coating composition for forming antireflective film.

An antireflective film having a film thickness of 100 nm was formed in the same manner as Example 1 except that the above coating composition was employed, and it was subjected to various evaluations. Tables 1 and 2 show the results.

### EXAMPLE 10

In a container of 200 mL made of glass, 3.5 g of dispersion (solid content concentration: 20 mass%) of spherical hollow fine particles (2), 90.5 g of ethanol and 6 g of silicic acid oligomer solution (solid content concentration: 5 mass%) were put, and the mixture was stirred for 10 minutes to obtain a coating composition for forming antireflective film.

An antireflective film having a film thickness of 100 nm was formed in the same manner as Example 1 except that the above coating composition was employed, and it was subjected to various evaluations. Tables 1 and 2 show the results.

### EXAMPLE 11

In a container of 200 mL made of glass, 2 g of dispersion (solid content concentration: 20 mass%) of spherical hollow fine particles (1), 1 g of dispersion (solid content concentration: 30 mass%) of spherical solid fine particles (1), 91 g of ethanol and 6 g of silicic acid oligomer solution (solid content concentration: 5 mass%) were put, and the mixture was stirred for 10 minutes to obtain a coating composition for forming antireflective film.

An antireflective film having a film thickness of 100 nm was formed in the same manner as Example 1 except that the above coating composition was employed, and it was subjected to various evaluations. Tables 1 and 2 show the results.

### EXAMPLE 12

In a container of 200 mL made of glass, 2 g of dispersion (solid content concentration: 20 mass%) of spherical hollow fine particles (2), 1 g of dispersion

(solid content concentration: 30 mass%) of spherical solid fine particles (2), 91 g of ethanol and 6 g of silicic acid oligomer solution (solid content concentration: 5 mass%) were put, and the mixture was stirred for 10 minutes to obtain a coating composition for forming antireflective film.

An antireflective film having a film thickness of 100 nm was formed in the same manner as Example 1 except that the above coating composition was employed, and it was subjected to various evaluations. Tables 1 and 2 show the results.

### EXAMPLE 13

In a container of 200 mL made of glass, 2 g of dispersion (solid content concentration: 20 mass%) of spherical hollow fine particles (1), 1.5 g of dispersion (solid content concentration: 20 mass%) of fibrous hollow fine particles (1), 90.5 g of ethanol and 6 g of silicic acid oligomer solution (solid content concentration: 5 mass%) were put, and the mixture was stirred for 10 minutes to obtain a coating composition for forming antireflective film.

An antireflective film having a film thickness of 100 nm was formed in the same manner as Example 1 except that the above coating composition was employed, and it was subjected to various evaluations. Tables 1 and 2 show the results.

### EXAMPLE 14

In a container of 200 mL made of glass, 2 g of dispersion (solid content concentration: 20 mass%) of spherical solid fine particles (3), 2 g of dispersion (solid content concentration: 15 mass%) of fibrous solid fine particles (1), 90 g of ethanol and 6 g of silicic acid oligomer solution (solid content concentration: 5 mass%) were put, and the mixture was stirred for 10 minutes to obtain a coating composition for forming antireflective film.

An antireflective film having a film thickness of 100 nm was formed in the same manner as Example 1 except that the above coating composition was employed, and it was subjected to various evaluations. Tables 1 and 2 show the results.

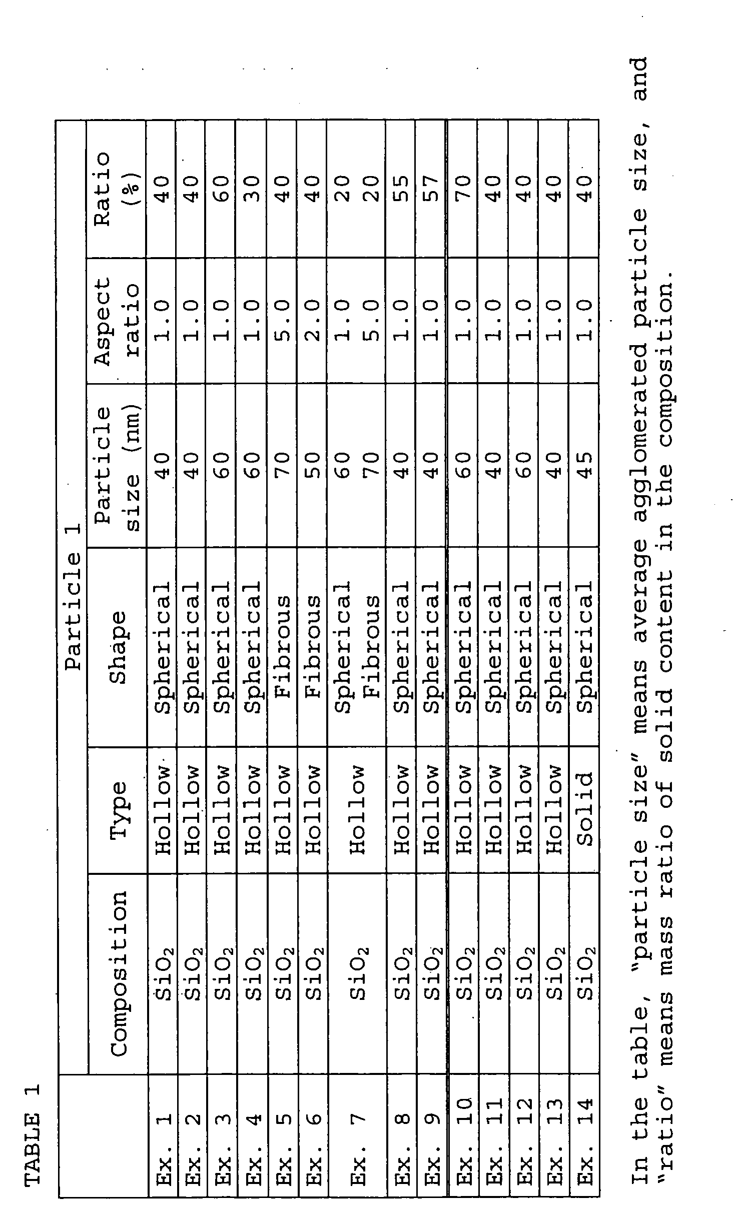

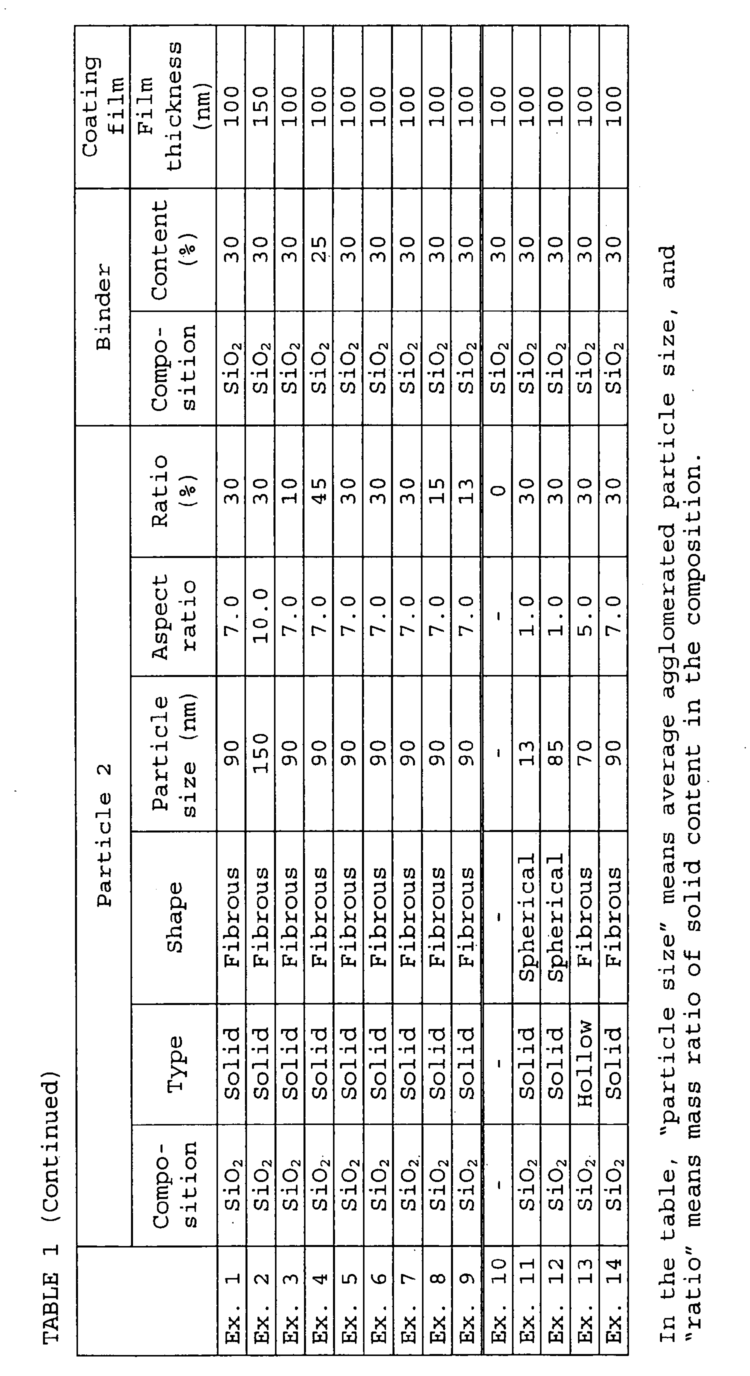

**TABLE 2**

| | External appearance | Haze value (%) | Minimum reflectivity (%) | | |
|---|---|---|---|---|---|
| | | | Before abrasion | After abrasion | △ reflectivity |
| Ex. 1 | ○ | 0.1 | 0.9 | 1.2 | 0.3 |
| Ex. 2 | ○ | 0.1 | 0.8 | 1.1 | 0.3 |
| Ex. 3 | ○ | 0.1 | 0.7 | 1.1 | 0.4 |
| Ex. 4 | ○ | 0.1 | 1.0 | 1.2 | 0.2 |
| Ex. 5 | ○ | 0.1 | 0.7 | 0.8 | 0.1 |
| Ex. 6 | ○ | 0.1 | 0.8 | 1.1 | 0.3 |
| Ex. 7 | ○ | 0.1 | 0.8 | 1.0 | 0.2 |
| Ex. 8 | ○ | 0.1 | 0.8 | 1.1 | 0.3 |
| Ex. 9 | ○ | 0.1 | 0.8 | 1.2 | 0.4 |
| Ex. 10 | ○ | 0.1 | 0.8 | 1.6 | 0.8 |
| Ex. 11 | ○ | 0.1 | 1.2 | 2.0 | 0.8 |
| Ex. 12 | ○ | 0.1 | 1.1 | 1.4 | 0.3 |
| Ex. 13 | ○ | 0.1 | 0.6 | 1.3 | 0.7 |
| Ex. 14 | ○ | 0.1 | 1.8 | 1.9 | 0.1 |

The antireflective films of Examples 1 to 9 each made from a coating composition for forming antireflective film containing fibrous solid fine particles and hollow fine particles, show sufficiently low reflectivity before abrasion and has high antireflective effect. Further, these antireflective films show little change in reflectivity due to abrasion, and accordingly, the films had high strength. Particularly, the antireflective films of Examples 5 and 7 each made from a coating composition for forming antireflective film containing fibrous hollow fine particles having an aspect ratio of 5.0 and fibrous solid fine particles having an aspect ratio of 7.0, showed considerably low reflectivity before abrasion, which were excellent in antireflective performance, which showed extremely little change in reflectivity by abrasion, and they had high film strength. Reflectivity before abrasion is preferably at most 1.0% in terms of minimum reflectivity in a wavelength range of from 380 nm to 1,200 nm for practical use. Meanwhile, change of minimum reflectivity between before and after abrasion is preferably at most 0.5% for practical use, more preferably at most 0.3%.

The antireflective film of Example 10 made from a coating composition for forming antireflective film containing no fibrous solid fine particles and containing hollow fine particles, showed sufficiently low reflectivity before abrasion and had high antireflective performance, but it showed significant change in reflectivity by abrasion, and its film strength was insufficient.

The antireflective film of Example 11 made from a coating composition for forming antireflective film containing spherical solid fine particles having small particle size and containing hollow fine particles, showed high reflectivity before abrasion and its antireflective performance was insufficient. Further, it showed significant change in reflectivity by abrasion, and its film strength was insufficient.

The antireflective film of Example 12 made from a coating composition for forming antireflective film containing spherical solid fine particles having large particle size and containing hollow fine particles, showed high reflectivity before abrasion and its antireflective performance was insufficient. On the other hand, it showed little change in reflectivity by abrasion, and its film strength was high.

The antireflective film of Example 13 made from a coating composition for forming antireflective film containing spherical hollow fine particles and fibrous hollow fine particles showed sufficiently low reflectivity before abrasion, and its antireflective performance was high, but it showed significant change in reflectivity by abrasion, and its film strength was insufficient.

The antireflective film of Example 14 made from a coating composition for forming antireflective film containing spherical solid fine particles and fibrous solid fine particles showed high reflectivity before abrasion, and its antireflective performance was insufficient. On the other hand, it showed little change in reflectivity by abrasion, and its film strength was high.

The antireflective film of Example 15 made from a coating composition for forming antireflective film containing spherical hollow fine particles and containing fibrous solid fine particles having large particle size showed high reflectivity before abrasion, and its antireflective performance was insufficient. On the other hand, since it contains relatively large amount of fibrous solid fine particles, it showed little change in reflectivity by abrasion, and its film strength was high.

### INDUSTRIAL APPLICABILITY

An article on which the antireflective film made from the coating composition for forming antireflective film of the present invention is formed, is useful for transparent components for vehicles (headlight covers, side mirrors, front transparent substrates, side transparent substrates, rear transparent substrates, etc.), opaque components for vehicles (instrument panel surfaces, etc.), meters, architectural windows, show windows, displays (notebook PCs, monitors, LCDs, PDPs, ELDs, CRTs, PDAs, etc.), LCD color filters, substrates for touch panels, pickup lenses, optical lenses, glass lenses, camera components, video components, cover substrates for CCDs, end faces of optical fibers, projector components, copier machine components, transparent substrates for solar cells, cell phone windows, backlight unit components (for example, light guide plates, cold cathode ray tubes, etc.), LCD brightness-improving films for backlight unit components (for example, prisms, half-transmission films, etc.), LCD brightness-improving films, organic EL light-emitting element components, inorganic EL light-emitting element components, fluorescent light-emitting element components, optical filters, end faces of optical components, illumination lumps, covers for illumination devices, amplifying laser light sources, antireflective films, polarizer films, films for agriculture or the like.

The entire disclosure of Japanese Patent Application No. 2006-271015 filed on October 2, 2006 including specification, claims and summary is incorporated herein by reference in its entirety.

## Claims

1. A coating composition for forming antireflective film containing a dispersion medium, fibrous solid fine particles, hollow fine particles and a binder, wherein an average agglomerated particle size of the fibrous solid fine particles measured by a dynamic light-scattering method is larger than an average agglomerated particle size of the hollow fine particles measured by a dynamic light-scattering method.

2. The coating composition for forming antireflective film according to Claim 1, wherein any one of the fibrous solid fine particles, the hollow fine particles and the binder contains SiO₂.

3. The coating composition for forming antireflective film according to Claim 1, wherein the fibrous solid fine particles and the hollow fine particles contain SiO₂.

4. The coating composition for forming antireflective film according to any one of Claims 1 to 3, wherein the hollow fine particles are fibrous hollow fine particles.

5. The coating composition for forming antireflective film according to any one of Claims 1 to 4, wherein an aspect ratio of the fibrous solid fine particles or the hollow fine particles is from 2 to 10.

6. The coating composition for forming antireflective film according to any one of Claims 1 to 4, wherein aspect ratios of the fibrous solid fine particles and the hollow fine particles are each from 2 to 10.

7. The coating composition for forming antireflective film according to any one of Claims 1 to 6, wherein a mass ratio (fibrous solid fine particles/hollow fine particles) between the fibrous solid fine particles and the hollow fine particles is from 0.1 to 1.5.

8. The coating composition for forming antireflective film according to any one of Claims 1 to 6, wherein a mass ratio (fibrous solid fine particles/hollow fine particles) between the fibrous solid fine particles and the hollow fine particles is from 0.25 to 1.5.

9. An article on which an antireflective film produced from the coating composition for forming antireflective film as defined in any one of Claims 1 to 8 is formed.

10. The article according to Claim 9, wherein the ratio (average agglomerated particle size of fibrous solid fine particles/film thickness of antireflective film) between the average agglomerated particle size of the fibrous solid fine particles measured by a dynamic light-scattering method and the film thickness of the antireflective film, is from 0.5 to 1.0.

11. The article according to Claim 9 or 10, wherein the film thickness of the antireflective film is from 50 to 300 nm.
